(19) Europäisches Patentamt

European Patent Office

Office européen des brevets

(11) **EP 0 712 381 B1**

(12) **EUROPÄISCHE PATENTSCHRIFT**

(45) Veröffentlichungstag und Bekanntmachung des Hinweises auf die Patenterteilung:
**20.01.1999 Patentblatt 1999/03**

(21) Anmeldenummer: 95920748.1

(22) Anmeldetag: 02.06.1995

(51) Int. Cl.$^6$: **C02F 3/28**, C12P 7/56

(86) Internationale Anmeldenummer:
**PCT/DE95/00722**

(87) Internationale Veröffentlichungsnummer:
**WO 95/33696 (14.12.1995 Gazette 1995/53)**

(54) **VERFAHREN ZUM REINIGEN VON MOLKEREIABWASSER**

METHOD OF PURIFYING WASTE WATER FROM DAIRIES

PROCEDE D'EPURATION D'EAUX USEES PROVENANT DE LAITERIES

(84) Benannte Vertragsstaaten:
**AT BE CH DE DK ES FR GB IE IT LI NL SE**

(30) Priorität: **08.06.1994 DE 4420033**

(43) Veröffentlichungstag der Anmeldung:
**22.05.1996 Patentblatt 1996/21**

(73) Patentinhaber:
**FRAUNHOFER-GESELLSCHAFT ZUR FÖRDERUNG DER ANGEWANDTEN FORSCHUNG E.V.
80636 München (DE)**

(72) Erfinder:
• **BÖRGARDTS, Peter
D-70197 Stuttgart (DE)**
• **KRISCHKE, Wolfgang
D-72183 Kirchentellinsfurt (DE)**
• **TRÖSCH, Walter
D-70329 Stuttgart (DE)**

(56) Entgegenhaltungen:
**EP-A- 0 055 382      EP-A- 0 072 010
EP-A- 0 265 409      EP-A- 0 346 983
EP-A- 0 393 818      WO-A-89/01510
FR-A- 2 555 200      FR-A- 2 674 865**

**Beschreibung**

Die vorliegende Erfindung betrifft ein Verfahren zum Reinigen von Molkereiabwasser durch anaerobe Stoffumwandlung und Abtrennung der entstehenden Reaktionsprodukte sowie eine Vorrichtung zur Durchführung dieses Verfahrens.

Bei konventionellen Verfahren der Abwasserreinigung werden die abbaubaren Bestandteile entweder anaerob zu Methan und $CO_2$ oder aerob zu $CO_2$, Wasser und Biomasse abgebaut. Dabei geht ein beträchtlicher Teil der in den Abwasserinhaltsstoffen enthaltenen Energie bzw., im Falle des aeroben Abbaus, die gesamte Energie verloren. Beim aeroben Verfahren treten zudem durch die hohe Biomassebildung beträchtliche Schlammengen auf. Der Hauptnachteil des bekannten anaeroben Abwasserbehandlungsverfahrens liegt in den langsamen Reaktionsgeschwindigkeiten, die zum Stoffumsatz benötigt werden (max. 1g/lh CSB-Abbau). Eine Übersicht zur anaeroben Behandlung von Molkereiabwässern geben Temper et al. in "Berichte aus Wassergütewirtschaft und Gesundheitsingenieurwesen", Technische Universität München, 1986, Nr. 67.

Aufgabe der vorliegenden Erfindung ist es, ein Verfahren und eine Vorrichtung zum Reinigen von Abwässern aus milchverarbeitenden Betrieben und insbesondere von molkehaltigen Abwässern bereitzustellen, bei welchem die Hauptkohlenstoffquelle nicht in Methan, $CO_2$ und Wasser, sondern in organische Säure umgewandelt wird, so daß ein Großteil der in den Ausgangssubstanzen enthaltenen Energie erhalten bleibt. Mit Hilfe der erfindungsgemäßen Lösung dieser Aufgabe erhält man ein Abwasser mit nur geringer CSB-Belastung sowie Milchsäure, die wiederum in der Lebensmittelindustrie, in der Landwirtschaft oder in der chemischen Industrie Verwendung finden kann.

Die Herstellung von Milchsäure aus Molke ist bekannt. Verfahren hierfür sind in der EP0265409 A1 und in der FR2555200 beschrieben. Allerdings ist der Zweck dieser Verfahren die kostengünstige Herstellung des Produkts aus Substraten auf Molkebasis. Sie unterscheiden sich daher in wesentlichen Merkmalen von der nachstehend näher beschriebenen Erfindung.

Im folgenden werden die beigefügten Figuren kurz erläutert.

Figur 1 ist ein Verfahrensschaubild, das schematisch eine beispielhafte Ausführungsform des erfindungsgemäßen Verfahrens mit einigen Varianten zeigt.

Figur 2 zeigt die Konzentration von gelösten Calcium- und Phosphationen (jeweils in mg/l) in Abhängigkeit vom während der Vorbehandlung eingestellten pH-Wert.

Figur 3 zeigt den transmembranen Fluß bei der Filtration eines mit L. casei fermentierten Molkepermeats in Abhängigkeit von der Zeit, mit oder ohne Vorbehandlung mit Base (Mikrofiltrationsmembran Carbosep M20, (Hersteller: Rhône-Poulenc) 0,2 mm nomineller Porendurchmesser, 1 bar, 1 m/s).

Figur 4 zeigt die Bildung von Milchsäure aus Molkepermeat (P) mit unhydrolysiertem und im Reaktor mit Alcalase hydrolysiertem Molkeeiweiß (M).

Figur 5 zeigt die Produktivitäten verschiedener Reaktorsysteme bei verschiedenen Lactosekonzentrationen.

Figur 6 zeigt einen Vergleich von Ultrafiltration und Mikrofiltration bei Filtration von L. casei aus Molkefermentationslösung bei gleichen Bedingungen (1 bar, 1m/s) Carbosep M 20 (0,2 mm) und Carbosep M9 (300000 Dalton) (Hersteller: Rhône-Poulenc).

Figur 7 zeigt eine mögliche Konfiguration der bipolaren Membranen in der dritten Stufe des erfindungsgemäßen Verfahrens.

Figur 8 zeigt den Einfluß der Milchsäurekonzentration im Abwasser auf die Elektrodialyseleistung.

Figur 9 zeigt die Abnahme des CSB-Wertes im Abwasser bei bipolarer Elektrodialyse von batchweise zugeführter (vorgereinigter) Fermentationsbrühe.

Figur 10 zeigt die Gewinnung von freier Milchsäure und Natronlauge durch bipolare Membranen.

Figur 11 zeigt die im Text näher beschriebene Verfahrensweise bei der Elektrodialyse zur kombinierten Abwasserreinigung und Produktgewinnung (batchweise Zuführung der Fermentationsbrühe).

Figur 12 zeigt die Abtrennung von Salzen aus Milchsäure durch eine nachgeschaltete monopolare Elektrodialyse (mit Chlorid angereicherte Fermentationslösung).

Figur 13 zeigt in schematischer Weise beispielhaft eine Vorrichtung zur Durchführung des erfindungsgemäßen Verfahrens.

Das erfindungsgemäße Verfahren umfaßt im wesentlichen drei Stufen: In der ersten Stufe wird das Abwasser mit Base vorbehandelt. In der zweiten Stufe wird das vorbehandelte Abwasser in einen Fermenter eingeführt, wo die enthaltene Lactose zu Milchsäure fermentiert wird, und die gebildete Fermentationsbrühe wird nachgereinigt. In der dritten Stufe erfolgt das Abkonzentrieren der Milchsäure im Abwasser und das Aufkonzentrieren von Lactationen und Base mit Hilfe bipolarer Elektrodialyse.

Der Begriff "Milchsäure" wird vorliegend in weitem Sinne verwendet und umfaßt alle chemischen Formen des Lactats (so die Säure selbst, deren Salze bzw. die Lactat-Anionen) in Abhängigkeit von den jeweils gewählten bzw. herrschenden Bedingungen, insbesondere vom pH-Wert.

Alle Abwässer einer Molkerei, die Milch- oder Molkereste enthalten, können für das erfindungsgemäße Verfahren verwendet werden. Bevorzugt wird jedoch das bei der Ultrafiltration von molkehaltigen Abwässern anfallende Permeat eingesetzt. Für die Ultrafiltration wird (zur Sterilfiltration und zur Proteingewinnung) eine Ausschlußgrenze von 15000 bis 30000 empfohlen. Eine sterile Abnahme und Zufuhr zum Puffertank ist damit bei ansonsten sachgerechter Durchführung gewährleistet.

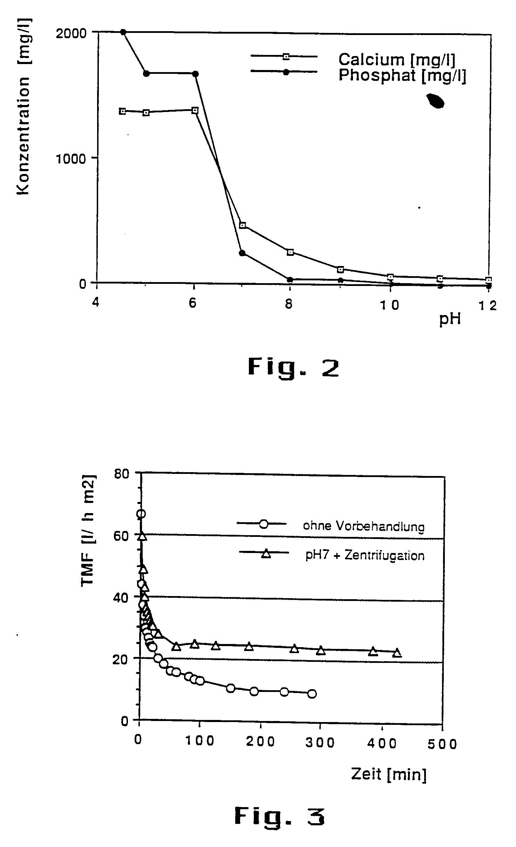

Das Abwasser wird in der ersten Stufe mit Base behandelt, vorzugsweise mit wäßriger Base. Als Base eignen sich Alkalihydroxide, Alkalicarbonate und/oder Ammoniumverbindungen. Ganz besonders bevorzugt ist es, als Base diejenige alkalische Lösung zu verwenden, die in der dritten Stufe bei der Aufkonzentrierung der Filtrate anfällt. Dadurch kann auf den Zusatz externer Chemikalien (die möglicherweise die CSB-Belastung des Abwassers wieder erhöhen würden) weitestgehend oder sogar ganz verzichtet werden. Die zugeführte Basenmenge sollte ausreichen, um einen Teil, möglichst den größten Teil der im Abwasser vorhandenen $Ca^{2+}$- und $Mg^{2+}$-Ionen und $PO_4^{3-}$-Ionen auszufällen (siehe Figur 2). Es ist bevorzugt, daß der pH-Wert des Abwassers auf $\geq 7$ eingestellt wird. In einer Ausführungsform des Verfahrens wird das Abwasser auf einen pH von $\geq 10$ eingestellt und in einen Vorlagebehälter eingefüllt, in dem das ausfallende Calciumphosphat sedimentiert. Selbstverständlich kann die Abtrennung des Calciumphosphates auch durch Zentrifugation oder Filtration, in einem Hydrozyklon oder durch andere vergleichbare Maßnahmen erfolgen.

In einer spezifischen Ausführungsform wird die oben beschriebene Basenbehandlung in mindestens einem Puffertank (Vorlagebehälter) durchgeführt. Dieser ist mit einem Rührwerk und einer Temperierung ausgestattet. Er ist möglichst sterilisierbar und sollte mit einer pH-Regulierung oder zumindest mit einem pH-Meßgerät ausgestattet sein. Er hat eine Öffnung im Boden des Behälters zum Abzug des ausgefallenen Calciumhydrogenphosphats und möglicher anderer Niederschläge und einen weiteren Abzug, der höhenverstellbar ist und zur Entnahme des Permeats dient. Zwei (oder auch mehr) solcher Puffertanks (Vorlagebehälter) können wechselweise betrieben werden. Ein Puffertank dient dann jeweils zur Beschickung des Fermenters. Der andere Tank wird befüllt, und der entsprechende pH-Wert wird eingestellt und das Calciumhydrogenphosphat und dergleichen abgetrennt.

Vorteile der erfindungsgemäßen Abwasservorbehandlung sind die deutliche Absenkung der Phosphatbelastung im Abwasser und die Vermeidung von Fouling- und Scalingproblemen bei denjenigen nachfolgenden Verfahrensschritten, die den Einsatz von Membranen erfordern (z.B. Mikrofiltration (siehe Fig. 3) oder Elektrodialyse), sowie die Verringerung der Sterilitätsprobleme im Pufferbehälter. Außerdem treten keine unerwünschten Ausfällungen während der Fermentation auf, da nur lösliche Milchsäuresalze gebildet werden.

Das wie voranstehend beschrieben vorbehandelte Abwasser wird nun in der zweiten Stufe des erfindungsgemäßen Verfahrens einem Fermentationsreaktor (Fermenter) zugeführt. Es ist wünschenswert, daß im Fermenter ein für die Fermentations-Organismen optimaler oder zumindest günstiger pH-Wert, beispielsweise ein pH-Bereich von 6,0 bis 6,5, eingestellt und aufrechterhalten wird. Dies kann auf mehreren Wegen erfolgen: Einmal kann, wie im Stand der Technik beschrieben, eine Regulation des pH-Wertes im Fermenter durch die Zudosierung von Base in den Fermenter selbst erfolgen. Bevorzugt ist jedoch eine Ausführungsform, bei der der pH-Wert im Fermenter über eine Regulation des Volumens des in den Fermenter einströmenden, alkalisch eingestellten Abwassers einreguliert wird. Dies kann mit Hilfe eines pH-Staten erfolgen, der den pH-Wert im Fermenter mißt und die Zudosierung des Abwassers automatisch so reguliert, daß die im Fermenter produzierte Milchsäure neutralisiert und der pH auf dem zuvor beschriebenen Wert gehalten wird. Dadurch wird eine automatische Einstellung auf einen gewünschten Stoffumsatz und damit eine im wesentlichen konstante Produktkonzentration erzielt. Der Reaktor sollte ferner bevorzugt einen Füllstandsregler aufweisen, um ein konstantes Füllstandsniveau zu gewährleisten.

Bei einer Abnahme der mikrobiellen Umsatzrate, z.B. durch Betriebsstörungen oder Kontaminationen, regelt sich der Zulauf automatisch herunter, die Produktkonzentration bleibt aber gleich. Steigt die biologische Aktivität im Fermenter wieder, so wird der Zustrom automatisch wieder erhöht. Bei bekanntem Lactosegehalt im Zulauf ermöglicht diese Ausführungsform der Erfindung, die Fermentation automatisch bei Substratvollumsatz zu betreiben. Die pH-Statisierung hat außerdem den Vorteil, daß sich bei der weiteren Aufarbeitung der Milchsäure eine konstante Zulaufkonzentration des Produktes ergibt und durch den Vollumsatz im Fermenter ein Bewachsen nachgeschalteter Filtrations- und Elektrodialysemembranen verhindert wird (was zu einer Verbesserung der transmembranen Filtratflüsse führt), und die maximal erreichbare CSB-Minderung im Abwasser erreicht werden kann.

Im Fermenter werden die im Abwasser vorhandene Lactose sowie evtl. andere Zucker mit Hilfe von Milchsäurebakterien homofermentativ zu Milchsäure umgesetzt.

Milchsäurebakterien nutzen nur ein sehr kleines Spektrum der in der Natur vorhandenen Stoffwechselwege zum Abbau von Nährstoffen aus: Sie wandeln bestimmte Zucker wie Lactose anaerob in Milchsäure um und gewinnen aus dieser Reaktion Energie für Wachstum und die Aufrechterhaltung der Zellfunktion. Der Abbau des Zuckers und das Wachstum der Organismen sind weitgehend miteinander gekoppelt und finden gleichzeitig statt.

Die Wahl des oder der Stämme für das erfindungsgemäße Verfahren ist beliebig, jedoch handelt es sich bei den Milchsäurebakterien vorzugsweise um Organismen aus den Gattungen Lactobacillus, Lactococcus und Streptococcus.

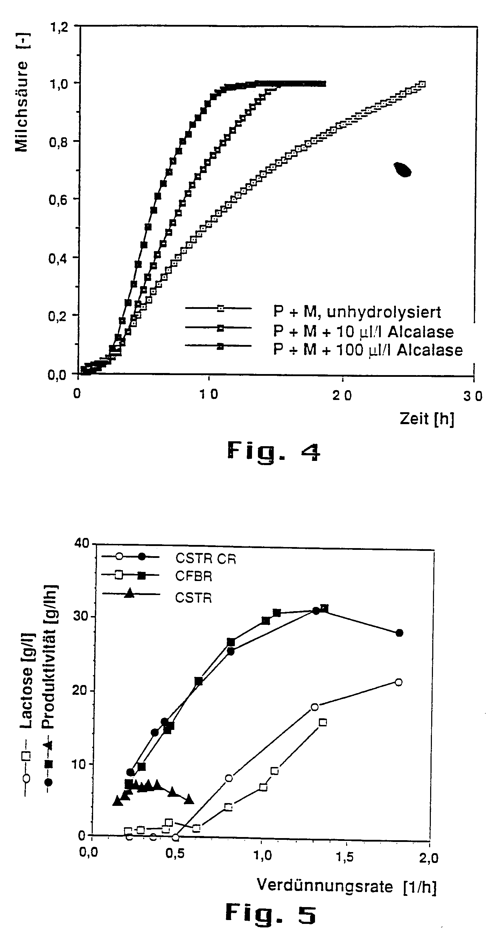

Das Wachstum der Milchsäurebakterien ist in hohem Maße vom Vorhandensein bestimmter Zusatzstoffe abhängig. Insbesondere sind dies Vitamine, Spurenelemente und Stickstoff in organischer Form, d.h. in Form von (hydrolysierten) Proteinen, Peptiden und Aminosäuren. In einer bevorzugten Ausführungsform der Erfindung kann bei der Umsetzung der Lactose zu Milchsäure auf den Zusatz derartiger Zusatzstoffe und insbesondere auf den einer organischen Stickstoffquelle für die Milchsäurebakterien ganz oder größtenteils verzichtet werden. Die bekannten Verfahren zur Milchsäureherstellung aus Molkepermeat beschreiben die Notwendigkeit einer solchen Zugabe externer Stickstoffquellen wie beispielsweise Hefeextrakte, Maisquellwasser und dergleichen (siehe EP 0 265 409 A1 und 0 393 818 A1). Erfindungsgemäß kann die Zugabe von stickstoffhaltigen Verbindungen dann ganz oder zum größten Teil unterbleiben, wenn die im Abwasser vorhandenen, stickstoffhaltigen Substanzen, die natürlicherweise nicht oder nur langsam von Milchsäurebakterien verstoffwechselt werden können, während der Fermentation oder bereits zuvor in solche Stoffe überführt werden, die von den Organismen relativ rasch genutzt werden können. So können Proteine hydrolysiert werden, beispielsweise durch Zusatz von Enzymen wie z.B. Proteasen, die wahlweise direkt in den Fermenter eingebracht oder in einer früheren Verfahresstufe zugeführt werden können. Geeignet sind Proteasen, die bei den vorliegenden Fermentationsbedingungen aktiv sind, z.B. HT Proteolytic 200 (Solvay), Neutrase und Alcalase (Novo Nordisk) (siehe Figur 4). Alternativ kann die Stickstoffquelle auch durch Säurehydrolyse oder dgl. erzeugt werden. Die Temperatur im Fermenter wird in Abhängigkeit von den gewählten Mikroorganismen eingestellt. Sie kann beispielsweise 30-45° C betragen.

Die Fermentation selbst kann in einem beliebigen Fermentationsreaktor durchgeführt werden, beispielsweise in einem Wirbelschichtreaktor, in dem die Mikroorganismen auf porösem Sinterglas oder anderen, möglichst inerten Trägern immobilisiert sind, oder in einem Rührkesselreaktor. Der Reaktor ist bevorzugt in Edelstahl ausgeführt. Um hohe Produktivitätsraten zu erzielen, ist es empfehlenswert, den Rührkesselreaktor mit einem Zellrückhaltesystem auszustatten. Dies führt zu deutlich höheren Produktivitäten (siehe Figur 5). Es erfolgt ein bis zu 20mal so schneller CSB-Umsatz im Vergleich zu den bekannten anaeroben Abwasserbehandlungsverfahren. Für die Zellrückführung wird ein Teilstrom aus dem Fermenter entnommen und im Kreislauf über eine Zellabtrennstufe geführt. Die Zellabtrennung kann durch Membranverfahren oder durch Zentrifugation bewirkt werden. Wird mit einem Wirbelschichtreaktor gearbeitet, kann am Kopf des Reaktors ein Volumenstrom abgezogen und unten in den Reaktor zentral eingeführt werden, um das Wirbelbett zu fluidisieren. Ein weiterer Volumenstrom kann abgeführt werden, um das Reaktorvolumen konstant zu halten.

Für die Zellabtrennung sind Membranverfahren bevorzugt. Aus dem Zellabtrennmodul wird ein zellfreier Permeatstrom abgezogen. Daneben ist ein Bleedstrom vorgesehen, der zellhaltige Fermentationsbrühe führt und direkt hinter der Filtrationseinheit oder direkt aus dem Fermenter abgezogen werden kann. Durch Variation des Verhältnisses von Bleed- zu Permeatstrom kann der gewünschte Aufkonzentrierungsgrad eingestellt werden. Dabei ist das sog. Rückführverhältnis definiert als

$$R = \frac{\text{Permeatstrom}}{\text{Permeatstrom} + \text{Bleedstrom}}.$$

Betrachtet man die Fermenterbilanzgleichung für die Biomasse, so wird der große Einfluß des Rückführverhältnisses R auf das System ersichtlich. Man erhält die Differentialgleichung:

$$V_R \frac{\dot{dx}}{dt} = V_R (\mu - k_d) x - D V_R (1-R) x$$

x   Biomasse (g/l)

$V_R$   Reaktorvolumen (l)

$k_d$   Sterbeterm (1/h)

D   Durchflußrate (1/h)

$\mu$   Wachstumsrate (1/h)

t   Zeit

Mit steigendem Rückführverhältnis steigt die Biomassekonzentration im System an, und man erhält bei gleichen Durchflußraten ein Vielfaches der submersen Biomasse. Da der Lactoseumsatz im allgemeinen der Biomasse selbst und dem Biomassewachstum proportional ist, ergibt sich mit höheren Biomassekonzentrationen ein höherer Substratverbrauch pro Reaktorvolumen, d.h. eine bessere Umsatzrate und damit eine bessere Produktbildungsrate. Auf der anderen Seite ist es unerwünscht, den Reaktor bei vollständiger Zellrückhaltung zu betreiben, da in einem solchen Fall Veränderungen der Kulturen durch den entsprechenden Selektionsdruck und dadurch Verschiebungen im Produktspektrum zu erwarten sind. Außerdem konzentrieren sich unerwünschte Substanzen, die durch das Medium in den Reaktor gelangen, sehr stark auf. Diese haben ungünstige Auswirkungen auf das biologische und das verfahrenstechnische System.

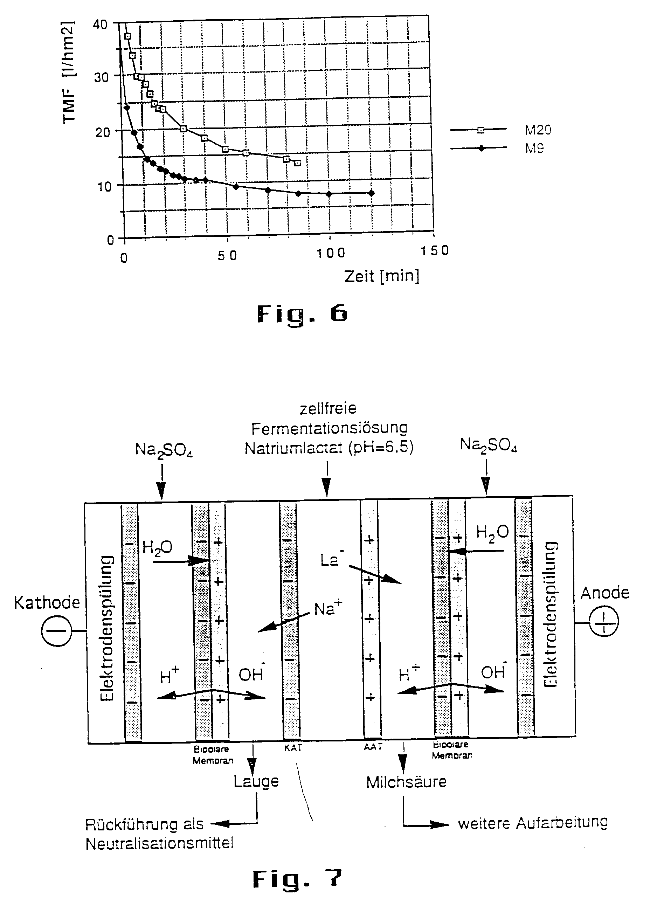

Das Zellrückhaltesytem wird durch den Umlaufvolumenstrom aus dem Fermenter gespeist. Es kann mit Ultrafiltrationsmembranen betrieben werden. Bevorzugt ist es allerdings, Mikrofiltrationsmembranen zu verwenden, da wegen des deckschichtkontrollierten Verfahrens auch mit diesen Membranen eine vollständige Abtrennung aller Komponenten erreicht werden kann, gleichzeitig jedoch bei gleichem Energieeintrag höhere transmembrane Flüsse erzielt werden, wodurch die benötigte Membranfläche verringert werden kann (siehe Figur 6). Außerdem ermöglicht der Einsatz von Mikrofiltrationsmembranen das Arbeiten bei niedrigeren Drücken. Es werden bevorzugt keramische Mehrkanalrohrmodule mit einem Porendurchmesser von etwa 0.2 μm eingesetzt, die in Edelstahlgehäusen angeordnet sind. Es sind aber auch andere Module, Membranmaterialien und Porendurchmesser möglich. Die Verrohrung sollte bevorzugt in Edelstahl ausgeführt werden. Die Filtrationseinheit sollte mit einer Vorrichtung zur externen Rückspülung der Module ausgestattet sein. Die Rückspülung kann durch einen permeatseitigen Druckstoß erfolgen, der durch sterilfiltrierte Druckluft auf einen Zwischenbehälter erzeugt werden kann. Vor und hinter den Filtrationsmodulen sind bevorzugt Drucksensoren und Volumenstrommeßgeräte angebracht.

Die Filtrationseinheit kann mehrsträngig und ganz besonders bevorzugt zweisträngig ausgelegt sein, um ein Modul bei Bedarf zu reinigen und trotzdem die Filtration nicht zu unterbrechen. Die Anlage ist bevorzugt CIP-fähig. Der Bleedstrom kann durch eine Verhältnismengenregelung in ein bestimmtes Verhältnis zum Permeatstrom aus der Filtrationseinheit gesetzt werden. Das Permeat wird bevorzugt kontinuierlich der Elektrodialyse (siehe unten) zugeführt, und zwar bevorzugt direkt über eine Nanofiltrationseinheit oder über einen selektivten Ionenaustauscher.

Der Ionenaustauscher wird eingesetzt, um die zellfreie Fermentationsbrühe von evtl. noch vorhandene Calcium-Resten zu befreien. Gut geeignet sind hier beispielsweise die schwach sauren makroretikulären Kationenaustauscherharze Duolite XE 702 oder Duolite C 467 von der Firma Rohm & Haas, Paris. Durch ihre speziellen reaktiven Gruppen binden diese Ionenaustauscher bevorzugt zweiwertige Ionen, wie Calcium und Magnesium, während sie die einwertigen Ionen, die während der dritten Verfahrensstufe der Abwasserreinigung und Milchsäuregewinnung nicht störend interferieren, weitestgehend passieren lassen. Bei Einsatz des Ionenaustauschers läßt sich die Calciumkonzentration der Fermentationsbrühe sehr weit senken, beispielsweise auf unter 5 ppm. Da Elektrodialysemembranen, wie sie nachfolgend während der dritten Stufe eingesetzt werden, im allgemeinen empfindlich gegenüber dem Ausfallen von $Ca(OH)_2$ im basischen Konzentrat sind, ergibt sich hierdurch der Vorteil, daß die verwendeten Membranen eine wesentlich längere Standzeit aufweisen. Das Ionenaustauscherharz befindet sich in einer, bevorzugt aber in zwei (oder auch mehr) Ionenaustauschersäulen, die wechselweise kontinuierlich vom Permeatstrom der Filtration durchströmt werden. Hinter der Austauschersäule sollte sich ein Meßgerät zur Messung der Beladung des Austauschers befinden. Ist ein Austauscher beladen, kann automatisch auf die zweite bzw. eine andere Säule umgeschaltet werden, so daß der Elektrodialyse ein kontinuierlicher Strom zugeführt wird. Die Ionenaustauscher werden durch Säure und Lauge regeneriert, die nach Beladung des Ionenaustauschermaterials durch die jeweils nicht im Betrieb befindliche(n) Austauschersäule(n) geleitet werden.

Alternativ oder zusätzlich zur Verwendung eines Ionenaustauschers kann eine Nanofiltrationseinheit eingesetzt werden. Die Nanofiltrationseinheit besteht aus einer Hochdruckpumpe und Filtrationsmodulen, die mit Nanofiltrationsmembranen ausgestattet sind. Es eignen sich solche Nanofiltrationsmembranen, die Calcium und Lactose zurückhalten, Milchsäure jedoch im wesentlichen passieren lassen. Als Beispiel sei hier die Filmtec Membran XP 45 (Fa. Dow Chemical) genannt. Diese zeigt eine Rückhaltung von bis zu 99 % für Lactose und Calcium, wohingegen das Lactat nur mit 30% zurückgehalten wird. Enthält das Abwasser beispielsweise nach der Vorbehandlung im Reaktor noch eine Konzentration von 1,15 g/l Calcium, so kann die Calciumkonzentration auf 40 ppm gesenkt werden. Bevorzugt werden Drücke zwischen 5 und 20 bar eingestellt. Das Retentat der Nanofiltration wird vorzugsweise in den Fermenter zurückgeführt. Ein weiterer Vorteil dieser Verfahrensführung ist es, daß eventuell vorhandene Lactose, die die Nanofiltrationsmembran nicht passieren kann, mit dem Retentatstrom wieder zurück in den Fermenter geführt wird und somit auch bei unvollständigem Umsatz im Fermenter das Abwasser nicht belasten kann. Alternativ erfolgt eine Aufkonzentrierung und entsprechende kontinuierliche Abführung des Retentats. Das Permeat wird der Elektrodialyseeinheit zugeführt.

In einer speziellen Ausführungsform der vorliegenden Erfindung schließt sich der Verfahrensschritt der Nanofiltration direkt an den Verfahrensschritt der Fermentation der Lactose an, d.h., die den Reaktor verlassende Flüssigkeit wird nicht durch eine Mikrofiltrationseinheit oder dergleichen geführt. In dieser Ausführungsform kann auch auf das Durchleiten der Flüssigkeit durch einen Ionenaustauscher verzichtet werden. Zellen, Lactose und Calcium werden von der Nanofiltrationseinheit zurückgehalten. Die den Reaktor verlassende Flüssigkeit wird nur einem einzigen Verfahrensschritt unterworfen, nämlich einer Nanofiltration, wobei ein Permeat gewonnen wird, das in seiner Zusammensetzung ein ideales Produkt für die weitere Aufarbeitung ist. Diese Ausführungsform ist besonders empfehlenswert, wenn druckunempfindliche Organismen eingesetzt werden.

Sowohl die erste als auch die zweite Stufe des erfindungsgemäßen Verfahrens, die Vorbehandlung und die Fermentation mit Nachreinigung der Fermentationsbrühe, können diskontinuierlich durchgeführt werden. Bevorzugt werden sie jedoch kontinuierlich betrieben.

Die dritte Stufe des erfindungsgemäßen Verfahrens, die Abkonzentrierung der Milchsäure im Abwasser und damit die Erzeugung eines Abwassers mit einer nur sehr geringen CSB-Belastung, erfolgt durch Elektrodialyse mit bipolaren Membranen. Mit Hilfe dieser Technik ist es möglich, gleichzeitig freie Säure in hoher Konzentration und Reinheit direkt aus der Fermentationslösung zu gewinnen. Dabei entsteht als drittes Produkt Lauge, die bevorzugt der pH-Erhöhung während der Vorbehandlung des Abwassers dient, wie voranstehend beschrieben, bzw. für die pH-Regelung im Fermenter eingesetzt werden kann.

Membranen für die bipolare Elektrodialyse sind bekannt. Im einfachsten Falle sind sie aus Laminaten zweier ionenselektiver Membranen entgegengesetzter Polarität aufgebaut. Der gesamte potentialabfall über die Membran setzt sich aus den Einzelwiderständen der Membranen und dem Widerstand der Lösung zwischen den Membranen zusammen. Daraus ergibt sich, daß die Dicke des Zwischenraums zwischen den Membranen wünschenswerterweise möglichst gering ist. Deshalb werden im vorliegenden Verfahren besonders bevorzugt solche Membranen verwendet, wie sie z.B. in der deutschen Offenlegungsschrift 4211267 A1 offenbart sind. Dies sind Mehrschichtmembranen mit einer anionenselektiven und einer kationenselektiven Schicht, die hergestellt wurden, indem eine erste ionenselektive Schicht aus einer ersten Polymerlösung in Gegenwart einer solchen Menge an Wasserdampf erzeugt wird, daß einerseits eine Kondensation des Wassers vermieden und andererseits die Mischungslücke im Phasendiagramm Polymer/Lösungsmittel/ Wasser erreicht wird, worauf nach Entfernung des Lösungsmittels auf derjenigen Seite dieser ersten ionenselektiven Schicht, die dem Wasserdampf ausgesetzt worden war, eine zweite ionenselektive Schicht mit entgegengesetzter Ladung erzeugt wird. Mit Hilfe dieses Verfahrens können bipolare Membranen hergestellt werden, bei denen die Dicke der ladungsneutralen Zwischenschicht zwischen der anionen- und der kationenselektiven Schicht sehr gering ist. Die bevorzugten Membranen besitzen trotz des sehr geringen Widerstandes chemische Eigenschaften und eine Permselektivität, die mit denen anderer Membranen vergleichbar sind.

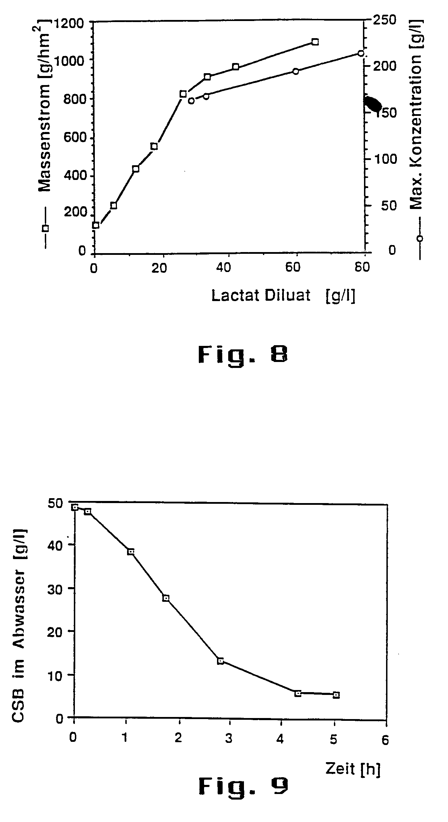

Die Verwendung der bipolaren Elektrodialyse zum Reinigen von Milchsäure ist Stand der Technik (siehe EP 0393818 A1 und 0346983 A2). Eine mögliche Konfiguration der bipolaren Membranen im erfindungsgemäßen Verfahren ist in Fig. 7 dargestellt. Das Filtrat der Fermentationslösung zirkuliert im Diluatkreislauf. Entsprechend ihrer Ladung wandern die Lactatanionen in den sauren und die Natriumionen in den basischen Kreislauf. Die Einstellung der pH-Werte in den beiden Kreisläufen erfolgt durch die beiden bipolaren Membranen. Aus dem sauren Kreislauf kann dann die freie Milchsäure abgezogen werden und aus dem basischen die gebildete Lauge, die, wie bereits zuvor beschrieben, rückgeführt und frisch zugeführtem Abwasser zur pH-Erhöhung zugesetzt werden kann.

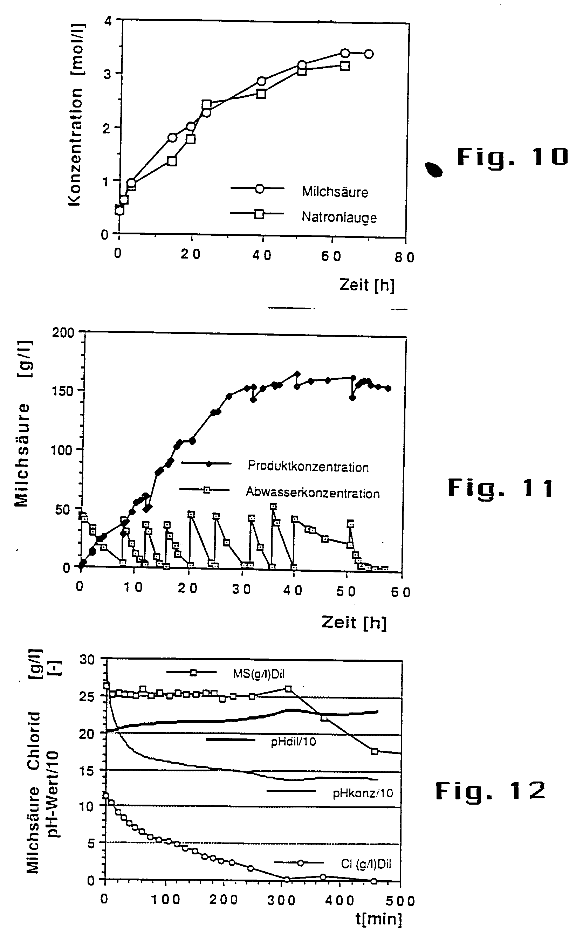

Die Gewinnung von möglichst reiner, möglichst hochkonzentrierter Milchsäure bzw. von ebensolchem Lactat als Produkt ist nicht das vorrangige Ziel der vorliegenden Erfindung. Vielmehr ist dies vor allem das Erzeugen von Abwasser mit möglichst geringen CSB-Werten. Dabei ist es selbstverständlich wünschenswert, gleichzeitig Milchsäure in hoher Konzentration und guter Reinheit zu gewinnen. Da bei sinkenden Konzentrationen im Diluat - also niedrigen CSB-Werten im Abwasser - die Stromausbeuten und die maximal erreichbare Aufkonzentrierung der sauren und basischen Produkte deutlich abnehmen, kann man nicht beide Ziele zusammen durch einfache bipolare Elektrodialyse mit jeweils guten Resultaten erreichen (siehe Fig. 8). Es wird deshalb als besonders bevorzugt vorgeschlagen, die bipolare Elektrodialyse wie folgt durchzuführen: Die Fermentationsbrühe wird batchweise, d.h. diskontinuierlich, auf die gewünschte Abwasserkonzentration abkonzentriert. Die CSB-Abnahme ist in Fig. 9 dargestellt. Dabei werden das saure und das basische Konzentrat bis zur maximalen Produktkonzentration aufkonzentriert (Fig. 10). Während dieses Verfahrensschritts wird kontinuierlich Wasser durch die Membranen transportiert. Deshalb können die anfallenden Produktströme (Lauge und Milchsäure) kontinuierlich und mit konstanter Konzentration abgenommen werden (Fig. 11). Die Produkte dieses Verfahrensschrittes fallen also kontinuierlich an; dementsprechend kann die angefallene Lauge wieder kontinuierlich dem Abwasser während der AbwasserVorbehandlungsstufe zugeführt werden, wenn diese ebenfalls kontinuierlich durchgeführt wird. Auch kann die gewonnene Milchsäure zusätzlich in weiteren kontinuierlichen Verfahrensschritten aufgereinigt werden. Wird eine niedrigere Produktkonzentration als die maximale gewünscht, so kann im Konzentratkreis durch Wasser verdünnt oder das Konzentrat ebenfalls im Batch-Verfahren gewonnen werden.

Die Elektrodialyseeinheit umfaßt ein oder mehrere Elektrodialysestacks, in denen die monopolaren Ionenaustauschermembranen und die bipolaren Membranen entsprechend angeordnet sind. Die oben beschriebene, bevorzugte Elektrodialyse mit diskontinuierlichem Ablauf bei kontinuierlichem Anfall der aufgearbeiteten Fermentationsbrühe kann wie folgt realisiert werden: Es sind 4 Behälter um die Elektrodialysestacks angeordnet. Darunter sind zwei Diluatbehälter, wobei immer einer durch den kontinuierlich anfallenden Zulaufstrom gefüllt wird und der zweite im Kreislauf über das Elektrodialysemodul gepumpt wird. Der Diluatkreislauf ist bevorzugt mit einem Leitfähigkeitsmeßgerät ausgestattet. Bei Unterschreiten eines bestimmten Wertes wird auf den zweiten, inzwischen gefüllten Behälter umgeschaltet. Der entsalzte Behälter wird automatisch geleert und dann wieder mit frischem Zulauf gefüllt. Durch die Verfahrensweise erfolgt ein Übergang von kontinuierlichem Betrieb auf zyklischen Batch-Betrieb. In den beiden anderen Behältern befinden sich die Produkte Milchsäure und die Lauge. Die Lösungen werden aus den Behältern auch im Kreislauf über die Elektrodialysestacks gepumpt. Im Milchsäurekreislauf sind ein pH- und ein Leitfähigkeitsmeßgerät eingebaut. Im Laugekreislauf ist nur ein Leitfähigkeitsmeßgerät eingebaut. In allen drei Kreisläufen wird vor dem Eintritt in das Modul der Druck gemessen. Aus den beiden Behältern kann ein kontinuierlicher Strom abgenommen werden, oder aber es kann auch bis zu einer gewünschten Konzentration aufkonzentriert werden und dann werden die Behälter im zyklischen Batch-Betrieb bis zu einer bestimmten Restmenge geleert. Die Elektrodialyse wird meist entweder in Kunststoff oder in Edelstahl ausgelegt. Eine CIP-Reinigungsmöglichkeit ist bevorzugt vorgesehen. Selbstverständlich kann die Zahl der Behälter höher sein, wie der Fachmann leicht erkennen kann, z.B. wenn die Anlagengröße bzw. der Durchsatz mehr parallele Ströme erfordert.

In einer besonderen Ausführungsform der vorliegenden Erfindung werden während der bipolaren Elektrodialyse angrenzend an das Diluat Kationenaustauscher-Membranen mit niedrigen Transportzahlen für Calcium angeordnet. Der Vorteil dieser Ausführungsform ist die Standzeiterhöhung der Elektrodialysemembran. Auch kann hierbei der weiter oben beschriebene calciumselektive Ionenaustauscher, durch den die Fermentationsbrühe zum Nachreinigen geleitet wird, kleiner dimensioniert sein oder sogar weggelassen werden. Als Kationenaustauscher-Membran zur Verwendung in der bipolaren Elektrodialyse eignet sich beispielsweise die Membran Neosepta CMS der Firma Tokuyama Soda, die für Calcium und Magnesium nur eine Transportzahl von 0,1 gegenüber 0,9 für die vorhandenen Natrium- und Kaliumionen hat. Dadurch wird der Transport von Calciumionen in die Konzentratkammer deutlich verlangsamt und vermindert.

In einer anderen Ausführungsform der vorliegenden Erfindung kann die Elektrodialyse zweistufig durchgeführt werden, wobei die Fermentationsbrühe in einer ersten Stufe einer bipolaren Elektrodialyse unterworfen wird, in der sie kontinuierlich abkonzentriert wird, jedoch nur auf etwa 10 bis 15 g/l Diluatkonzentration. In einer zweiten Stufe wird eine monopolare Elektrodialyse durchgeführt, in der die Abkonzentrierung auf die gewünschte Abwasserkonzentration, vorzugsweise in Batch-Fahrweise, erfolgt. Das in der zweiten Stufe gewonnene Natriumlactat kann zum Feedstrom der ersten Elektrodialyse-Stufe rückgeführt werden, um dort die Eingangskonzentration an Lactat zu erhöhen. Alternativ kann das Natriumlactat als Produkt gewonnen werden. In einer anderen Ausführungsform der vorliegenden Erfindung wird auch die zweite Elektrodialyse als bipolare Elektrodialyse betrieben, wobei dann bevorzugt die Produkte zumindest teilweise den Produktströmen aus der ersten Einheit wieder zugemischt werden.

Mit Hilfe des vorliegenden erfindungsgemäßen Verfahrens wird das Abwasser weitgehend gereinigt. So läßt sich beispielsweise der CSB-Wert um 85 bis 95 % senken und freie Milchsäure in einer Konzentration von ungefähr 200 g/l gewinnen. Die Laugenkonzentration kann dabei etwa 2 mol/l erreichen.

Die wie vorstehend beschriebene gewonnene Milchsäure kann auf Wunsch weiter gereinigt werden. So können beispielsweise die neben Lactat im sauren Konzentrat aus dem Abwasser aufkonzentrierten anderen Ionen durch eine nachgeschaltete monopolare Elektrodialyse abgetrennt werden. Erfindungsgemäß wird bei diesem Reingungsschritt ein pH-Wert von etwa 2-3 eingehalten, weil die Milchsäure mit einem pKs-Wert von 3,9 unter diesen Bedingungen fast vollständig undissoziiert vorliegt. In älteren Verfahren zur Fermentation von Molke wurde vorgeschlagen, die Molke durch Elektrodialyse zu entsalzen. Allerdings mußte man dabei Verluste an dem gewünschten Produkt Milchsäure hinnehmen. Wird, wie vorliegend vorgeschlagen, eine Entsalzung durch monopolare Elektrodialyse erst nach der bipolaren Elektrodialyse durchgeführt, fallen die Verluste an Milchsäure wesentlich geringer aus, als wenn die Salze vor der Fermentation abgetrennt werden (Figur 12). Ein weiterer Vorteil ist, daß die Salze während der Fermentation den Organismen für deren Metabolismus zur Verfügung stehen, wenn sie nicht bereits vor der Fermentationsstufe abgetrennt wurden.

Auch die gewonnene Lauge kann einer Reinigung durch monopolare Elektrodialyse unterworfen werden.

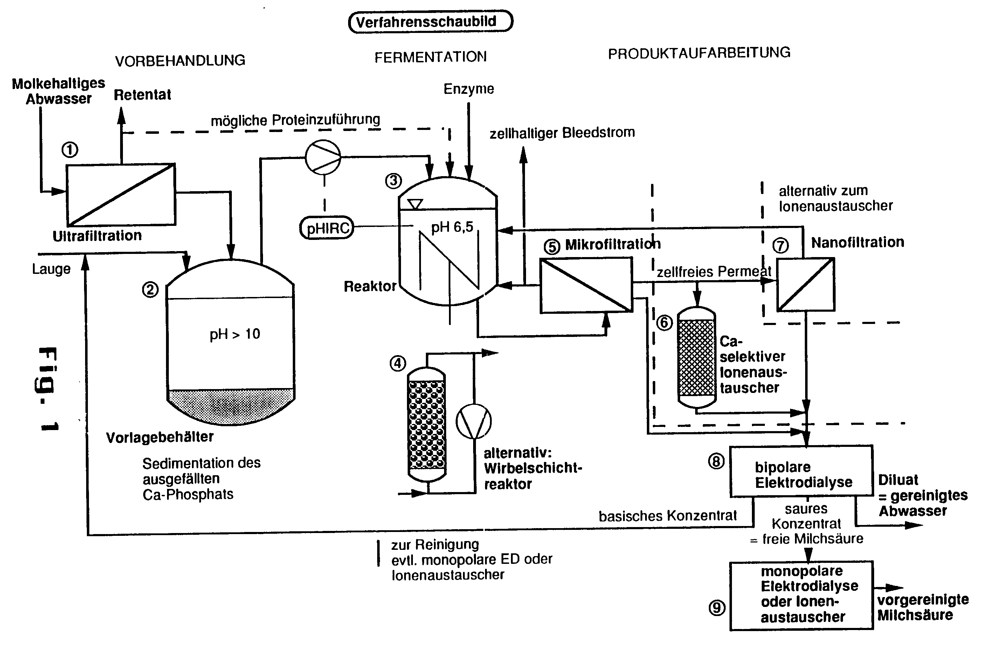

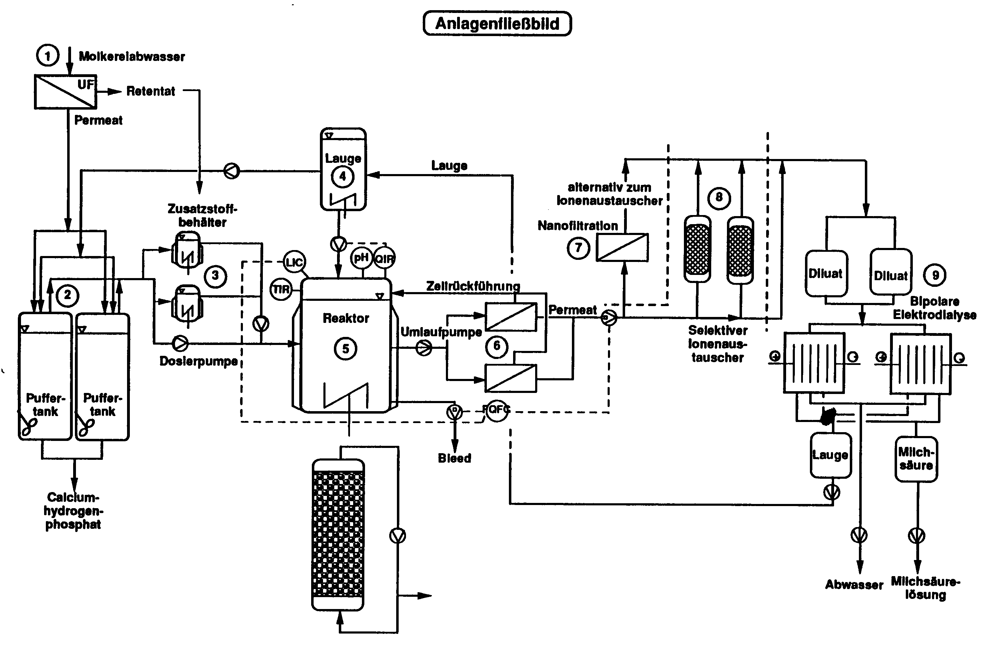

Nachstehend soll das erfindungsgemäße Verfahren anhand einer schematischen Darstellung einer spezifischen Ausführungsform mit einigen Varianten beispielhaft erläutert werden (siehe Figur 1). Auch wird eine Ausführungsform der Vorrichtung näher beschrieben (siehe Figur 13).

Das Verfahrensschaubild in Figur 1 zeigt die Zuführung eines molkehaltigen Abwassers in eine Ultrafiltrationseinheit (1). Während das Retentat entfernt wird, wird das Permeat im Vorlagebehälter (2) mit Base auf pH > 10 versetzt und das ausgefallene Calciumphosphat sedimentiert.

Aus diesem Behälter abgezogene Flüssigkeit wird - unter Einstellung des Zustrom-Volumens durch einen pH-Staten im Reaktor - in einem Fermentationsreaktor (3), ausgestattet mit einem Rührwerk, bei einem pH-Wert von 6,5 fermentiert, wobei der Zusatz von Protein möglich ist. Alternativ kann die Fermentation in einem Wirbelschichtreaktor (4) erfolgen. Die Fermentationsbrühe wird einer Mikrofiltrationseinheit (5) zugeführt, und der zellhaltige Bleedstrom wird teilweise in den Fermenter (3) rückgeführt und teilweise aus dem Kreislauf entnommen. Das zellfreie Permeat passiert entweder einen Caselektiven Ionenaustauscher (6) oder eine Nanofiltrationseinheit (7), deren (lactosehaltiges) Retentat wiederum in den Fermenter zurückgeleitet oder auch direkt einer weiteren Aufarbeitung zugeführt wird. Die so gereinigte Fermentationsbrühe wird anschließend in einer Elektrodialyseeinheit (8) einer bipolaren Elektrodialyse unterworfen. Dabei entsteht als Diluat das gewünschte gereinigte Abwasser, ferner ein saures Konzentrat, das die Milchsäure enthält und zur weiteren Reinigung einer monopolaren Elektrodialyse unterworfen oder durch einen Ionenaustauscher geleitet werden kann, sowie ein basisches Konzentrat, das wiederum dem Vorlagebehälter (2) zugeführt werden kann.

Die in Figur 13 dargestellte Vorrichtung zeigt eine Ultrafiltrationseinheit (1), in der das Molkereiabwasser vorbehandelt wird. Der Vorlagebehälter (2) besteht hier aus zwei Puffertanks, in die Molkereiabwasser aus (1) und Lauge aus einem Behälter (4) eingeleitet werden kann, mit Rührwerken und mit Bodenöffnungen zum Abzug von z.B. Calciumhydrogenphosphat. Der Zusatz-Stoffbehälter (3) der hier ebenfalls zweifach vorhanden ist, ist sterilisierbar und bevorzugt temperierbar und dient z.B. zur enzymatischen Hydrolyse von vorher abgetrenntem Retentat oder zur Vorbereitung anderer Zusatzstoffe. Die entsprechenden Zusatzstoffe werden in den Zulaufstrom aus dem Puffertank in entsprechender Konzentration (Verhältnismengenregelung) dosiert und in den Reaktor (5) geführt. Der Laugenbehälter (4) besteht aus laugebeständigem Material. Er wird bevorzugt, aber nicht zwingend, mit in der bipolaren Elektrodialyse gewonnener Lauge gespeist und bei Bedarf mit frischer Lauge nachgeschärft. Er ist mit einer Füllstandsüberwachung versehen. Durch Dosierpumpen werden Laugeströme in die Puffertanks und in den Reaktor dosiert. Der Reaktor (5) ist einmal als Rührkesselreaktor und darunter - als Alternative - als Wirbelschichtreaktor dargestellt. Er weist einen pH-Staten, einen Füllstandsregler, eine Temperaturmeß- und -regeleinheit und einen Zuflußregler auf. Aus dem Rührkesselreaktor wird ein Umlaufvolumenstrom abgezogen, über eine Membraneinheit geführt und wieder in den Reaktor zurückgeführt. Ein zweiter Volumenstrom wird als sogenannter Bleedstrom direkt hinter der Filtrationseinheit oder direkt aus dem Fermenter abgezogen. Dieser Strom wird durch eine Verhältnismengenregelung in ein bestimmtes Verhältnis zum Permeatstrom aus der Filtrationseinheit gesetzt. Aus dem Wirbelschichtreaktor wird ein Volumenstrom am Kopf des Reaktors abgeführt und unten in den Reaktor zentral eingeführt, um das Wirbelbett zu fluidisieren. Ein weiterer Volumenstrom wird abgeführt, um das Reaktorvolumen konstant zu halten. Die Filtrationseinheit (6), hier zweisträngig ausgelegt, wird durch den Umlaufvolumenstrom aus dem Fermenter gespeist. Sie ist mit einer Vorrichtung zur externen Rückspülung der Module ausgestattet. Das Permeat der Einheit (6) wird über die gekoppelte Füllstandsregelung des Fermenters mit der Verhältnismengenregelung zwischen Bleed- und Permeatstrom eingestellt. Das Permeat gelangt anschließend direkt, über die Nanofiltrationseinheit (7) oder eine Ionenaustauschereinheit (8) zum Elektrodialysemodul (9). Das Retentat der Nanofiltration kann wiederum zum Reaktor (5) zurückgeführt oder aber abgeführt werden. Die Ionenaustauschereinheit (8) besteht hier aus zwei Säulen, die wechselweise kontinuierlich vom Filtrationspermeat durchströmt werden. Hinter den Säulen befindet sich ein Meßgerät zur Messung der Beladung des Austauschers sowie eine Anordnung, die bei voller Säule automatisch auf die andere Säule umschaltet. Regeneration erfolgt durch nicht dargestelltes Durchleiten von Säure und Lauge aus entsprechenden Vorratsbehältern durch die stillgelegte Säule. Die Elektrodialyse (9) umfaßt ein oder mehrere Elektrodialysestacks, in denen die monopolaren Ionenaustauschermembranen und die bipolaren Membranen entsprechend angeordnet sind. Zwei Diluatbehälter werden abwechselnd mit dem - fakultativ nachgereinigten - Permeat der Filtrationseinheit (6) gefüllt, das kontinuierlich anfällt, wobei der jeweils andere Behälter im Kreislauf (nicht dargestellt) über das Elektrodialysemodul gepumpt wird. Der Kreislauf ist mit einem Leitfähigkeitsmeßgerät ausgestattet. Wird ein bestimmter Wert unterschritten, wird auf den anderen Behälter umgeschaltet, während der erste mit der nun abkonzentrierten Flüssigkeit automatisch entleert und dann kontinuierlich mit frischem Permeat-Zulauf gefüllt wird. Die in der Elektrodialyseeinheit anfallende Lauge und Milchsäure wird in zwei weiteren Behältern gesammelt, wobei auch Lauge und Milchsäure entweder im Kreislauf geführt werden, bis eine gewünschte Konzentration erreicht ist, oder aber kontinuierlich aus den Behältern abgenommen werden können. Der Laugenbehälter ist über eine Leitung mit dem Laugenbehälter (4) verbunden, der wiederum die Pufferbehälter (2) und den Reaktor (5) mit Lauge versorgt.

Die gezeigte Vorrichtung ist selbstverständlich variabel und wird vom Fachmann entsprechend angepaßt, wenn andere vorstehend beschriebene Ausführungsformen des Verfahrens realisiert werden sollen.

**Patentansprüche**

1. Verfahren zum Reinigen von Molkereiabwasser, umfassend die folgenden Stufen:

   (a) Vorbehandeln des Abwassers mit Base;
   (b) Einführen des vorbehandelten Abwassers in einen Fermenter, anaerobes Fermentieren der im Abwasser vorhandenen Lactose zu Milchsäure und Nachreinigen der im Fermenter gebildeten Fermentationsbrühe;
   (c) Abkonzentrieren des Lactats im Abwasser und Aufkonzentrieren von Milchsäure und Base mit Hilfe bipolarer Elektrodialyse.

2. **Verfahren nach Anspruch 1, dadurch gekennzeichnet**, daß das Vorbehandeln des Abwassers mit einer Base, ausgewählt unter Alkalihydroxid, Alkalicarbonat und/oder Ammoniumverbindungen, durchgeführt wird.

3. Verfahren nach Anspruch 2, **dadurch gekennzeichnet**, daß der pH-Wert des Abwassers beim Vorbehandeln auf $\geq 7$ eingestellt wird und/oder daß die zugesetzte Menge an Base ausreicht, um den größten Teil der im Abwasser vorhandenen $Ca^{2+}$-Ionen und $PO_4^{3-}$-Ionen auszufällen.

4. Verfahren nach einem der voranstehenden Ansprüche, **dadurch gekennzeichnet**, daß das Einführen des vobehandelten Abwassers in den Fermenter derart erfolgt, daß im Fermenter ein für die Fermentationsorganismen günstiger oder optimaler pH-Wert eingestellt und aufrechterhalten wird.

5. Verfahren nach Anspruch 4, **dadurch gekennzeichnet**, daß die Einstellung des pH-Wertes im Fermenter durch Einstellen des pH-Wertes des zugeführten Abwassers oder durch Einstellen des Volumenzustroms des vorbehandelten Abwassers erfolgt.

6. Verfahren nach einem der voranstehenden Ansprüche, **dadurch gekennzeichnet**, daß das anaerobe Fermentieren ohne Zusatz einer externen Stickstoffquelle für die Mikroorganismen durchgeführt wird.

7. Verfahren nach einem der voranstehenden Ansprüche, **dadurch gekennzeichnet**, daß durch Zugabe von Enzymen wie Proteasen in das Abwasser Hydrolyseprodukte von internen Stickstoffverbindungen erzeugt werden, die während der Fermentation als Stickstoffquelle für die Mikroorganismen verfügbar sind.

8. Verfahren nach einem der voranstehenden Ansprüche, **dadurch gekennzeichnet**, daß das Fermentieren in einem Rührkesselreaktor erfolgt und die Zellen aus der den Fermenter verlassenden Fermentationsbrühe zum Nachreinigen mit Hilfe einer Filtrationseinheit zurückgehalten und teilweise oder ganz rückgeführt werden.

9. Verfahren nach einem der voranstehenden Ansprüche, **dadurch gekennzeichnet**, daß die den Fermenter verlassende Fermentationsbrühe zum Nachreinigen durch calciumselektives Ionenaustauschmaterial geleitet wird, bevor sie der bipolaren Elektrodialyse unterworfen wird.

10. Verfahren nach einem der voranstehenden Ansprüche, **dadurch gekennzeichnet**, daß die den Fermenter verlassende Fermentationsbrühe zum Nachreinigen durch eine Nanofiltrationseinheit geleitet wird, bevor sie der bipolaren Elektrodialyse unterworfen wird.

11. Verfahren nach einem der voranstehenden Ansprüche, **dadurch gekennzeichnet**, daß die bipolare Elektrodialyse mit Hilfe von bipolaren Mehrschichtmembranen durchgeführt wird, wobei diese Membranen hergestellt wurden, indem eine erste ionenselektive Schicht aus einer ersten Polymerlösung in Gegenwart einer solchen Menge an Wasserdampf erzeugt wird, daß einerseits eine Kondensation des Wassers vermieden wird und andererseits die Mischungslücke im Phasendiagramm Polymer/Lösungsmittel/Wasser erreicht wird, worauf auf derjenigen Seite der gebildeten ionenselektiven Schicht, die dem Wasserdampf ausgesetzt worden war, eine zweite ionenselektive Schicht mit entgegengesetzter Ladung erzeugt wird.

12. Verfahren nach einem der voranstehenden Ansprüche, **dadurch gekennzeichnet**, daß die den Fermenter verlassende Fermentationsbrühe nach dem Nachreinigen batchweise der bipolaren Elektrodialyse unterworfen wird und die die Elektrodialyseeinheit verlassenden sauren und basischen Produktströme kontinuierlich abgenommen werden.

13. Verfahren nach einem der Ansprüche 1 bis 11, **dadurch gekennzeichnet**, daß die den Fermenter verlassende Fermentationsbrühe nach dem Nachreinigen kontinuierlich der bipolaren Elektrodialyse unterworfen wird, dort auf eine Diluatkonzentration von nicht weniger als etwa 10 g/l abkonzentriert wird und anschließend batchweise einer monopolaren Elektrodialyse unterworfen wird.

14. Verfahren nach Anspruch 13, **dadurch gekennzeichnet**, daß das bei der monopolaren Elektrodialyse gewonnene Natriumlactat der Fermentationsbrühe wieder zugemischt wird, bevor diese der bipolaren Elektrodialyse unterworfen wird.

15. Verfahren nach einem der Ansprüche 1 bis 12, **dadurch gekennzeichnet**, daß die den Fermenter verlassende Fermentationsbrühe nach dem Nachreinigen zwei nacheinander ablaufenden bipolaren Elektrodialysen unterworfen wird, wobei die in der zweiten Elektrodialyse anfallende Milchsäurelösung und/oder die in der zweiten Elektrodialyse anfallende Base den entsprechenden in der ersten Stufe anfallenden Produkten zugemischt wird/werden.

16. Vorrichtung zum Durchführen des Verfahrens nach einem der Ansprüche 1 bis 15, umfassend:

- mindestens einen Vorlagebehälter (2),
- einen Laugebehälter (4)
- einen Fermenter (5), bevorzugt einen Rührkessel- oder Wirbelschichtreaktor mit

    (a) einer Zellrückhalteinrichtung (6) und/oder
    (b) einer nachgeschalteten Nanofiltrationseinheit (7) und/oder
    (c) mindestens einen nachgeschalteten Ca-selektiven Ionenaustauscher (8)

    sowie
- eine Elektrodialyseeinheit (9) mit einem oder mehreren Elektrodialysestacks mit bipolaren Membranen und mit Behältern für der Einheit (9) zuzuleitendes Diluat und aufzufangende Lauge und Milchsäure, wobei der Laugenbehälter mit dem Laugenbehälter (4) zur Rückführung von bei der Elektrodialyse angefallener Lauge in den Kreislauf verbunden ist.

17. Vorrichtung nach Anspruch 16, **dadurch gekennzeichnet**, daß der Fermenter (5) mit einem pH-Staten ausgerüstet ist, der den pH-Wert im Fermenter mißt und die Zudosierung der basischen Flüssigkeit aus dem Vorlagebehälter (2) so reguliert, daß der genannte pH-Wert einen günstigen Bereich aufweist.

18. Vorrichtung nach Anspruch 16 oder 17, **dadurch gekennzeichnet**, daß die Zellrückhalteeinrichtung (6) Membranen, z.B. Mikrofiltrationsmembranen und bevorzugt keramische Mehrkanalrohrmodule mit Porendurchmessern von etwa 0.2 µm umfaßt und/oder mit einer Einrichtung zur externen Rückspülung der Module ausgestattet ist.

19. Vorrichtung nach einem der Ansprüche 16 bis 18, **dadurch gekennzeichnet**, daß Vorlagebehälter (2) Zellrückhalteeinrichtung (6) Ionenaustauscher (8) und/oder Behälter für der Elektrodialyseinheit (9) zuzuleitendes Diluat doppelt vorhanden und parallel so geschaltet sind, daß jeweils eine der beiden Einheiten im kontinuierlichen Verfahren eingesetzt ist, während die andere außer Verfahrensbetrieb ist, um regeneriert, gereinigt, befüllt oder dergleichen zu werden.

20. Vorrichtung nach einem der Ansprüche 16 bis 19, **dadurch gekennzeichnet**, daß die Elektrodialyseeinheit (9) zwei Diluatbehälter, die abwechselnd befüllt werden, wobei jeder dieser Behälter an einen das/die Elektrodialysestacks(s) durchfließenden Kreislauf angeschlossen werden kann, wobei ein Leitfähigkeitsmeßgerät vorgesehen ist, das bei Unterschreiten eines bestimmten Wertes des Diluates den jeweiligen Behälter in den Kreislauf einschaltet, sowie einen Behälter für Milchsäure und einen Behälter für Lauge umfaßt, die jeweils an einen ebenfalls das/die Elektrodialysestack(s) durchfließenden Kreislauf angeschlossen sind.

21. Vorrichtung nach einem der Ansprüche 16 bis 20, **dadurch gekennzeichnet**, daß die Elektrodialyseeinheit (9) ein Elektrodialysestack mit bipolaren Membranen und Kationenaustauscher-Membranen mit niedrigen Transportzahlen für Calcium umfaßt.

## Claims

1. A method of purifying dairy waste water, comprising the following steps:

   a) pre-treating the waste water with a base:
   b) introducing the pre-treated waste water into a fermenter, effecting anaerobic fermentation of the lactose present in the waste water to lactic acid and effecting further purification of the fermentation liquor formed in the fermenter;
   c) reducing the concentration of the lactate in the waste water and concentrating lactic acid and base with the aid of bipolar electro-dialysis.

2. A method according to claim 1, characterized in that the pretreatment of the waste water is carried out with a base selected from alkali hydroxide, alkali carbonate and/or ammonium compounds.

3. A method according to claim 2, characterized in that the pH value of the waste water is adjusted to $\geq 7$ in the pretreatment and/or the added amount of base is sufficient for the major part of the $Ca^{2+}$ ions and $PO_4^{3-}$ ions present in the waste water to precipitate.

4. A method according to any of the preceding claims, characterized in that the introduction of the pre-treated waste water into the fermenter is so effected that pH value favourable to or optimum for the fermentation organisms is set and maintained in the fermenter.

5. A method according to claim 4, characterized in that the adjustment of the pH value in the fermenter is effected by adjusting the pH value of the waste water fed in or by adjusting the volume flow of the pre-treated waste water.

6. A method according to any of the preceding claims, characterized in that the anaerobic fermentation is carried out without addition of an external source of nitrogen for the microorganisms.

7. A method according to any of the preceding claims, characterized in that hydrolysis products are formed in the waste water from internal nitrogen compounds by the addition of enzymes such as protease, these products being available as a nitrogen source for the microorganisms during the fermentation.

8. A method according to any of the preceding claims, characterized in that the fermentation takes place in a stirred tank reactor and the cells from the fermentation liquor leaving the fermenter are retained for further purification with the aid of filtration unit and partially or wholly fed back.

9. A method according to any of the preceding claims, characterized in that the fermentation liquor leaving the fermenter is passed for further purification through calcium selective ion exchange material, before it is subjected to the bipolar electro-dialysis.

10. A method according to any of the preceding claims, characterized in that the fermentation liquor leaving the fermenter is passed for further purification through a nano-filtration unit, before it is subjected to the bipolar electro-dialysis.

11. A method according to any of the preceding claims, characterized in that the bipolar electro-dialysis is carried out with the aid of bipolar multi-layer membranes, wherein these membranes are produced in that a first ion-selective layer is formed from a first polymer solution in the presence of such an amount of water vapour that on the one hand condensation of the water is avoided and on the other hand the miscibility gap in the polymer/solvent/water phase diagram is obtained, whereafter a second ion-selective layer with opposite charge is formed on that side of the formed ion-selective layer which was subjected to the water vapour.

12. A method according to any of the preceding claims, characterized in that the fermentation liquor leaving the fermenter is subjected to the bipolar electro-dialysis in batches after the further purification and the acidic and basic product streams leaving the electro-dialysis unit are taken off continuously.

13. A method according to any of claims 1 to 11, characterized in that the fermentation liquor leaving the fermenter is subjected continuously to the bipolar electro-dialysis after the further purification, is reduce in concentration down to a concentration of diluate of not less than about 10 g/l and then subjected in batches to a monopolar electro-dialysis.

14. A method according to claim 13, characterized in that the sodium lactate obtained in the monopolar electro-dialysis is mixed into the fermentation liquor again, before this is subjected to the bipolar electro-dialysis.

15. A method according to any of claims 1 to 12, characterized in that the fermentation liquor leaving the fermenter is subjected after the further purification to two successive bipolar electro-dialyses, wherein the lactic acid solution occurring in the second electro-dialysis and/or the base occurring in the second electro-dialysis is/are mixed in with the corresponding products occurring in the first stage.

16. Apparatus for carrying out the method according to any of claims 1 to 15, comprising:

   - at least one receiver (2),
   - a lye container (4),
   - a fermenter (5), preferably a stirred tank or fluid bed reactor with

     (a) a cell retention device (6) and/or
     (b) a subsequent nano-filtration unit (7) and/or
     (c) at least one subsequent Ca-selective ion exchanger (8)

     also
   - an electro-dialysis unit (9) with one or more electro-dialysis stacks with bipolar membranes and with containers for diluate to be fed to the unit (9) and lye and lactic acid to be collected, wherein the lye container is connected to the lye container (4) for feeding back into the circuit lye occurring in the electro-dialysis.

17. Apparatus according to claim 16, characterized in that the fermenter (5) is equipped with a pH-stat which measures the pH value in the fermenter and so regulates the metering of the basic liquid from the receiver (2) that the said pH value is in a favourable range.

18. Apparatus according to claim 16 or 17, characterized in that the cell retention device (6) comprises membranes, e.g. micro-filtration membranes and preferably ceramic multi-channel tube modules with pore diameters of about 0.2 $\mu$m and/or is equipped with a device for external back washing of the module.

19. Apparatus according to any of claims 16 to 18, characterized in that the receivers (2), cell retention device, ion exchanger (8) and/or containers for the diluate to be fed to the electro-dialysis unit (9) are duplicated and so connected in parallel in each case that one of the two units is used in continuous operation in the method, while the other is out of method operation, in order to be regenerated, cleaned, filled or the like.

20. Apparatus according to any of claims 16 to 19, characterized in that the electro-dialysis unit (9) comprises two diluate containers which are filled alternately, wherein each of these containers can be connected to a circuit flowing through the electro-dialysis stack(s), wherein a conductivity measuring device is provided and switches the particular container into the circuit on falling below a predetermined values of the diluate, as well as a container for lactic acid and a container for lye, which are each connected to a circuit likewise flowing through the electro-dialysis stack(s).

21. Apparatus according to any of claims 16 to 20, characterized in that the electro-dialysis unit (9) comprises an electro-dialysis stack with bipolar membranes and cation exchange membranes with low transport numbers for calcium.

**Revendications**

1. Procédé d'épuration d'eaux usées de laiterie comprenant les étapes suivantes :

   a) prétraitement des eaux usées avec des bases,
   b) introduction des eaux usées prétraitées dans un fermenteur, fermentation anaérobie du lactose présent dans les eaux usées en acide lactique, et purification ultérieure du bouillon de fermentation formé dans le fermenteur,
   c) déconcentration du lactate dans les eaux usées et concentration de l'acide lactique et des bases à l'aide de l'électrodialyse bipolaire.

2. Procédé selon la revendication 1,
   caractérisé en ce que
   le prétraitement des eaux usées est effectué avec une base choisie parmi un hydroxyde de métal alcalin, un carbonate de métal alcalin et/ou des composés d'ammonium.

3. Procédé selon la revendication 2,
   caractérisé en ce que
   la valeur du pH des eaux usées lors du prétraitement est ajustée à $\geq 7$ et/ou la quantité ajoutée de base suffit pour précipiter la plus grande partie des ions $Ca^{2\pm}$ et $PO_4^{3-}$ présents dans les eaux usées.

4. Procédé selon l'une des revendications situées précédemment,
   caractérisé en ce que
   l'introduction des eaux usées prétraitées dans le fermenteur s'effectue de manière que dans le fermenteur on ajuste une valeur de pH favorable ou optimale pour les organismes de fermentation et on la maintient.

5. Procédé selon la revendication 4,
   caractérisé en ce que
   l'ajustement de la valeur du pH dans le fermenteur s'effectue par ajustement de la valeur du pH des eaux usées amenées ou par ajustement du courant d'amenée de volume des eaux usées prétraitées.

6. Procédé selon l'une des revendications situées précédemment,
   caractérisé en ce que
   la fermentation anaerobie est effectuée sans addition d'une source d'azote externe pour les micro-organismes.

7. Procédé selon l'une des revendications situées précédemment,
   caractérisé en ce que
   par ajout d'enzymes comme des protéases dans les eaux usées, des produits d'hydrolyse sont produits par les composés azotés internes qui sont disponibles pendant la fermentation comme source d'azote pour les micro-organismes.

8. Procédé selon l'une des revendications situées précédemment,
   caractérisé en ce que
   la fermentation s'effectue dans un réacteur à bac d'agitation et en ce que les cellules provenant du bouillon de fermentation qui sort du fermenteur, sont retenues pour une purification ultérieure à l'aide d'une unité de filtration et sont recyclées partiellement ou complètement.

9. Procédé selon l'une des revendications situées précédemment,
   caractérisé en ce que
   le bouillon de fermentation qui sort du fermenteur est conduit pour une purification ultérieure par un matériau d'échange d'ion sélectif pour le calcium avant qu'il ne soit soumis à l'électrodialyse bipolaire.

10. Procédé selon l'une des revendications situées précédemment,
caractérisé en ce que
le bouillon de fermentation qui sort du fermenteur est conduit pour une purification ultérieure à travers une unité de nanofiltration avant qu'il ne soit soumis à l'électrodialyse bipolaire.

11. Procédé selon l'une des revendications situées précédemment,
caractérisé en ce que
l'électrodialyse bipolaire est exécutée à l'aide de membranes à plusieurs couches, bipolaires pour lesquelles ces membranes ont été produites, procédé dans lequel une première couche sélective pour des ions, à partir d'une première solution de polymère est produite en présence d'une quantité de vapeur d'eau telle que d'une part on évite une condensation de l'eau et que, d'autre part, la lacune de mélange dans le diagramme de phase polymère/solvant/eau est atteinte, sur laquelle sur cette face de la couche sélective pour les ions, formée qui a été exposée à la vapeur d'eau, on produit une deuxième couche sélective pour les ions avec une charge opposée.

12. Procédé selon l'une des revendications situées précédemment,
caractérisé en ce que
le bouillon de fermentation qui sort du fermenteur après la purification ultérieure, est soumis lot par lot à l'électrodialyse polaire et en ce que les courants de produit acides et basiques qui sortent de i'unité d'électrodialyse sont retirés en continu.

13. Procédé selon l'une des revendications 1 à 11,
caractérisé en ce que
le bouillon de fermentation qui sort du fermenteur après la purification ultérieure est soumis en continu à l'électrodialyse bipolaire, là est déconcentré à une concentration de diluat de moins d'environ 10 g/l et ensuite est soumis lot par lot à une électrodialyse monopolaire.

14. Procédé selon la revendication 13,
caractérisé en ce que
le lactate de sodium produit lors de l'électrodialyse monopolaire est à nouveau mélangé au bouillon de fermentation avant que celui-ci ne soit soumis à l'électrodialyse bipolaire.

15. Procédé selon l'une des revendications 1 à 12,
caractérisé en ce que
le bouillon de fermentation qui sort du fermenteur après la purification ultérieure, est soumis à deux électrodialyses bipolaires qui se déroulent l'une après l'autre, dans lesquelles la solution d'acide lactique qui se forme dans la deuxième électrodialyse et/ou la base qui se produit dans la deuxième électrodialyse est (ou sont) mélangé(s) aux produits qui se forment dans la première étape, correspondants.

16. Dispositif d'exécution du procédé selon l'une des revendications 1 à 15 qui comprend :

- au moins un récipient d'alimentation (2),
- un réservoir à lessive (4)
- un fermenteur (5) de préférence un réacteur à bac d'agitation ou un réacteur à lit fluidifié avec :

    a) un dispositif de retenue des cellules (6) et/ou,
    b) une unité de nanofiltration (7) post-connectée et/ou
    c) au moins un échangeur d'ions sélectif pour le calcium post-connecté

ainsi qu'
une unité d'électrodialyse (9) avec un ou plusieurs empilements d'électrodialyse avec des membranes bipolaires et avec des récipients pour le diluat amené à l'unité (9) et pour la lessive et l'acide lactique à recueillir, pour lequel le récipient à lessive est relié au récipient à lessive (4) en vue du recyclage de la lessive qui s'est produite au cours de l'électrodialyse dans le circuit.

17. Dispositif selon la revendication 16,
caractérisé en ce que

le fermenteur (5) est équipé d'un pH-stat qui mesure la valeur du pH dans le fermenteur et qui règle l'admission dosée du liquide basique provenant du réservoir d'alimentation (2) de sorte que la valeur de pH citée possède une plage favorable.

18. Dispositif selon la revendication 16 ou la revendication 17,
caractérisé en ce que
le dispositif de retenue des cellules (6) comprend des membranes par exemple des membranes de microfiltration et de préférence des modules tubulaires à plusieurs canaux avec des diamètres de pores d'environ 0,2 $\mu$m et/ou est équipé d'un dispositif pour le rétro-lavage externe des modules.

19. Dispositif selon l'une des revendications 16 à 18,
caractérisé en ce que
le réservoir d'alimentation (2), le dispositif de retenue des cellules (6) à l'échangeur d'ions (8) et/ou le diluat amené au récipient pour l'unité d'électrodialyse (9) sont présents en double et sont connectes en parallèle de façon qu'à chaque fois une des deux unités est mise en oeuvre dans un processus en continu, alors que l'autre est hors service du processus afin d'être régénérée, nettoyée, remplie ou similaires.

20. Dispositif selon l'une des revendications 16 à 19,
caractérisé en ce que
l'unité d'électrodialyse (9) comprend deux récipients de diluat qui sont remplis alternativement dans laquelle chacun de ces récipients peut être connecté au circuit traversant le ou les empilements d'électrodialyse dans lesquels un appareil de mesure de la conductivité est prévu qui établit le contact lorsqu'une certaine valeur du diluat est inférieure, avec le récipient respectif dans le circuit ainsi qu'un récipient pour l'acide lactique et un récipient pour la lessive qui sont connectés à chaque fois à un circuit qui traverse également le ou les empilements d'électrodialyse.

21. Dispositif selon l'une des revendications 16 à 20,
caractérisé en ce que
l'unité d'électrodialyse (9) comprend un empilement d'électrodialyse avec des membranes bipolaires et des membranes d'échangeur de cations avec des nombres de transport pour le calcium, faibles.

Verfahrensschaubild

VORBEHANDLUNG  FERMENTATION  PRODUKTAUFARBEITUNG

Molkehaltiges Abwasser  Retentat  Enzyme

mögliche Proteinzuführung

zellhaltiger Bleedstrom

alternativ zum Ionenaustauscher

① Ultrafiltration

pHIRC

③ pH 6,5

Reaktor

⑤ Mikrofiltration

⑦ Nanofiltration

zellfreies Permeat

Lauge

② pH > 10

⑥ Ca-selektiver Ionenaustauscher

Vorlagebehälter

Sedimentation des ausgefällten Ca-Phosphats

④ alternativ: Wirbelschicht-reaktor

⑧ bipolare Elektrodialyse  Diluat = gereinigtes Abwasser

basisches Konzentrat  saures Konzentrat = freie Milchsäure

zur Reinigung evtl. monopolare ED oder Ionenaustauscher

⑨ monopolare Elektrodialyse oder Ionen-austauscher  vorgereinigte Milchsäure

Fig. 1

16

Fig. 2

Fig. 3

Fig. 4

Fig. 5

**Fig. 6**

**Fig. 7**

Fig. 8

Fig. 9

Fig. 10

Fig. 11

Fig. 12